# EUROPÄISCHE PATENTANMELDUNG

(11) **EP 1 035 366 A2**
(43) Veröffentlichungstag der Anmeldung: **13.09.2000**
(21) Anmeldenummer: 00104725.7
(22) Anmeldetag: 04.03.2000
(51) Int. Cl.: F16L 37/00, F16B 7/14, B64C 27/00

(54) **Einrichtung zum Verriegeln**

(30) Priorität: 10.03.1999 DE 19910450
(71) Anmelder: ZF Luftfahrttechnik GmbH, 34379 Calden (DE)
(72) Erfinder: Schreiber, Thomas, 81735 München (DE); Röhn, Torsten, 34587 Felsberg (DE)
(74) Vertreter: Zietlow, Karl-Peter

(57) **Zusammenfassung**

Die Erfindung geht aus von einer Einrichtung (6) zum Verriegeln eines Aktuators (1) mit einem in einem Zylinder (2) geführten Stellkolben (3), der eine sich zum Mantel hin keilförmig erweiternde Ringnut (5) aufweist, in die mindestens ein durch eine Feder (14) belasteter Verriegelungsbolzen (9) radial eingreift, wobei eine Hilfskraft den Verriegelungsbolzen (9) im Betriebszustand des Aktuators (1) außer Eingriff bringt, indem sie die Feder (14) weiter vorspannt.

Es wird vorgeschlagen, daß der Verriegelungsbolzen (9) eine zu seiner Längsachse (27) in Entriegelungsrichtung (28) geneigte Anlagefläche (12) aufweist, an der Fangklauen (15) anliegen und die von einem elektrischen Stellelement (19) in eine entriegelte Position gebracht und festgesetzt wird, wobei erregte Elektromagnete (24) eine Selbsthemmung an der Anlagefläche (12) des Verriegelungsbolzens (9) erzeugen. Die Einrichtung ist insbesondere zum Verriegeln von Aktuatoren (1) geeignet, die mit elektrischer Energie betrieben werden.

## Beschreibung

Die Erfindung betrifft eine Einrichtung zum Verriegeln, insbesondere eines Aktuators, mit den Merkmalen nach dem Oberbegriff von Anspruch 1.

In vielen Fällen der Regelungstechnik werden Aktuatoren angewendet, die beim Ausfallen oder Abschalten der Energieversorgung in eine sichere Position gebracht und dort verriegelt werden. Es ist bekannt, Götte, H.J.: "Einzelblattsteuerung beim Hubschrauber durch servohydraulische Aktuatoren im Rotorkopf", 11. Aachener fluidtechnisches Kolloquium, Fachgebiet Hydraulik, Aachen 1994, bei Hubschraubern mit Aktuatoren zur individuellen Ansteuerung der Rotorblätter Sicherungskolben vorzusehen, die bei Energieausfall einen Aktuatorkolben in eine sichere Position zurückführen und ihn dort halten. Zu diesem Zweck besitzen die Sicherungskolben ein konisch geformtes Ende, das in eine keilförmige Ringnut des Aktuatorkolbens eingreift. Der Aktuator wird hydraulisch betätigt, wobei der Hydraulikdruck auf die konischen Enden der Sicherungskolben wirkt und diese entgegen der Kraft einer Feder in eine Freigangposition für den Aktuatorkolben schiebt. Fällt der Hydraulikdruck aus, schieben die Federn, die als Gasspeicherfedern ausgebildet sein können, die Sicherungskolben in die keilförmige Nut zurück.

Für Aktuatoren, die nach anderen Antriebsprinzipien arbeiten, z. B. elektrische oder elektromagnetische Aktuatoren, steht häufig kein derartiges Arbeitspotential für die Entriegelung zur Verfügung oder verbraucht im Falle elektromagnetischer Prinzipien besonders viel Energie.

Der Erfindung liegt die Aufgabe zugrunde, eine Einrichtung zum Verriegeln, insbesondere eines Aktuators, zu schaffen, die auch für die Anwendung bei elektrisch oder elektromagnetisch betätigten Aktuatoren geeignet ist, sowie relativ wenig Energie und Bauraum beansprucht. Ferner soll beim Ausfallen oder Abstellen der Energie die Verriegelung wieder schnell wirksam werden. Diese Aufgabe wird gemäß der Erfindung durch die Merkmale des Anspruchs 1 gelöst. Weitere Ausgestaltungen ergeben sich aus den Unteransprüchen.

Nach der Erfindung weist der Verriegelungsbolzen eine zu seiner Längsachse in Entriegelungsrichtung geneigte Anlagefläche auf, an der Fangklauen anliegen. Ein elektrisches Stellelement bringt die Fangklauen, die den Verriegelungsbolzen halten, in eine Position, in der der Aktuator entriegelt ist, und setzt sie fest. Damit die Fangklauen den Entriegelungsbolzen halten können, wirken erregte Elektromagnete auf sie und erzeugen eine Selbsthemmung an der Anlagefläche des Verriegelungsbolzens. Somit kann der Verriegelungsbolzen entgegen der Kraft einer Feder, die zweckmäßigerweise als Gasdruckfeder ausgebildet ist, mit wenig Energie und einer geringen Leistung von dem elektrischen Stellelement in die Entriegelungsposition gebracht werden. Als elektrisches Stellelement eignen sich Elektromotoren, vorzugsweise hybriderregte EC-Motoren, mit einer integrierten aktiv lösbaren Magnetbremse.

Die Elektromotoren verstellen über eine Hubspindel eine Hebelplatte, an der die Fangklauen angelenkt sind. In der Entriegelungsposition, wenn der Elektromotor abgestellt wird, fixiert die nun aktive Magnetbremse die Hubspindel. Wenn die Stromversorgung ausfällt, wirken die Elektromagnete nicht mehr auf die Fangklauen und die Selbsthemmung an der Anlage wird unterschritten, so daß die Feder den Verriegelungsbolzen in die Verriegelungsposition drückt und den Stellkolben in einer sicheren Position fixiert. Die Verriegelung spricht sehr schnell an. Die Geschwindigkeit ist im wesentlichen von der Energie abhängig, die beim Entriegeln in der Feder gespeichert wurde. Der Elektromotor kann für das Zuführen der Energie eine längere Zeit beanspruchen, so daß seine Leistung gering sein kann.

Der Weg des Verriegelungsbolzens kann so ausgelegt werden, daß er in der entriegelten Position noch axial etwas von der keilförmigen Ringnut überdeckt wird und somit ein Begrenzungsanschlag für den Stellkolben bildet. Ferner wird dadurch gewährleistet, daß der Verriegelungsbolzen sicher in die Ringnut einspurt und den Stellkolben in die sichere Position zurückstellt.

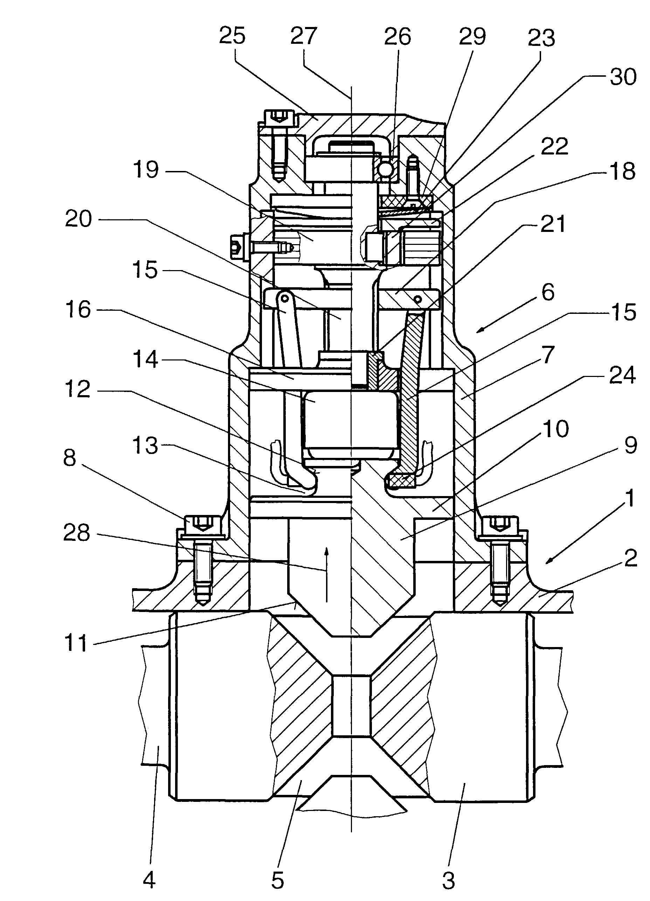

In der Zeichnung ist ein Ausführungsbeispiel der Erfindung dargestellt.

Die einzige Figur zeigt einen schematischen Teillängsschnitt durch eine erfindungsgemäße Einrichtung.

In einem Zylinder 2 eines Aktuators 1 ist ein Stellkolben 3 längs verschiebbar geführt. An den Enden des Stellkolbens 3 sind Kolbenstangen 4 vorgesehen, die z.B. auf den nicht näher dargestellten Verstellmechanismus von Rotorblättern eines Hubschraubers wirken. An dem Zylinder 2 ist ein Gehäuse 7 einer Verriegelungseinrichtung 6 mittels Schrauben 8 befestigt.

Der Stellkolben 3 besitzt eine sich zu seinem Mantel hin keilförmig erweiternde Ringnut 5, in die ein Verriegelungsbolzen 9 der Verriegelungseinrichtung 6 radial eingreift. Auf den Umfang des Stellkolbens 3 können mehrere Verriegelungseinrichtungen 6 angeordnet sein. Der Verriegelungsbolzen 9 weist an seinem freien Ende Keilflächen 11 auf, die im verriegelten Zustand an den Flanken der Ringnut 5 anliegen.

Die Figur zeigt die Verriegelungseinrichtung 6 in der entriegelten Position, in der ein Elektromotor 19 den Verriegelungsbolzen 9 in Entriegelungsrichtung 28 so weit verstellt hat, daß der Stellkolben 3 sich um einen vorgegebenen axialen Stellweg frei verschieben kann. Der Verriegelungsbolzen 9 wirkt in dieser Position als Begrenzungsanschlag für den Stellweg des Stellkolbens 3.

Der Elektromotor 19, der zweckmäßigerweise ein hybriderregter EC-Motor ist, dreht eine Hubspindel 20 um die Längsachse 27 und verschiebt damit axial eine Hebelplatte 18, die über ein Gewinde mit der Hubspindel 20 triebmäßig verbunden ist. Fangklauen 15, die an der Hebelplatte 18 angelenkt sind, liegen mit ihrem freien Ende an einer Anlagefläche 12 an, die von einer Flanke einer ringförmigen Ausnehmung 13 des Verriegelungsbolzens 9 gebildet wird. Auf die freien Enden der Fangklauen 15 wirken Elektromagnete 24, die im erregten Zustand eine Selbsthemmung an der Anlagefläche 12 bewirken.

Die Hubspindel 20 erstreckt sich durch den Elektromotor 19 und ist an ihrem äußeren Ende durch ein Lager 26, das als Festlager ausgebildet ist, und an ihrem inneren Ende durch ein Gleitlager 21, das als Loslager in einer Stützplatte 16 angeordnet ist, drehbar gelagert. Das Lager 26 ist axial durch einen Deckel 25 fixiert, der das Gehäuse 7 nach außen verschließt.

Im Gehäuse 7 ist drehfest, aber axial verschiebbar eine Bremsplatte 22 vorgesehen, die durch die Kraft einer Tellerfeder 23 gegen einen Rotor 30 des Elektromotors 19 gedrückt wird, und damit die Hubspindel 20 fixiert. Auf die Bremsplatte 22 wirkt ein Elektromagnet 24, der im bestromten Zustand die Bremsplatte 22 entgegen der Kraft der Tellerfeder 23 lüftet und die Hubspindel 20 freigibt. Wird der Elektromotor 19 in der Entriegelungsposition abgeschaltet, wird auch der Elektromagnet 29 stromlos. Die Tellerfeder 23 drückt die Bremsplatte 22 wieder gegen den Rotor 30 des Elektromotors 19.

Zwischen der Stützplatte 16 und dem Verriegelungsbolzen 9 ist eine Feder 14 vorgesehen, die zweckmäßigerweise als Gasdruckfeder ausgebildet ist und deren Vorspannung beim Entriegelungsvorgang weiter vorgespannt wird. Im Notfall, wenn die Stromversorgung ausfällt, sind die Elektromagnete 24 stromlos, so daß die Feder 14 die verminderte Haftreibung an der Anlagefläche 12 überwindet und den Verriegelungsbolzen 9 in die keilförmige Ringnut 5 schiebt. Der Verriegelungsbolzen 9 wird dabei über einen Führungsbund 10 im Gehäuse 7 geführt.

Ist die Notsituation vorüber wird der Elektromotor 19 betätigt und die Fangklauen 15 über die Hebelplatte 18 auf den Verriegelungsbolzen 9 zubewegt, so daß sie die Anlagefläche 12 mit ihren freien Enden wieder hintergreifen können. Durch Erregung der Elektromagnete 24 wird die Selbsthemmung an der Anlagefläche 12 erneut hergestellt.

Die Verriegelungseinrichtung 6, die bei Ausfall oder Abschaltung der elektrischen Versorgung selbständig in den verriegelten Zustand fährt, beansprucht nur einen geringen Bauraum. Sie eignet sich insbesondere für Aktuatoren im rotierenden System eines Hubschraubers, da sie nur eine geringe elektrische Leistung erfordert und ein geringes Gewicht hat.

### Bezugszeichen

- 1: Aktuator
- 2: Zylinder
- 3: Stellkolben
- 4: Kolbenstange
- 5: Ringnut
- 6: Einrichtung
- 7: Gehäuse
- 8: Schraube
- 9: Verriegelungsbolzen
- 10: Führungsbund
- 11: Keilfläche
- 12: Anlagefläche
- 13: Ausnehmung
- 14: Feder
- 15: Fangklaue
- 16: Stützplatte
- 18: Hebelplatte
- 19: Elektromotor
- 20: Hubspindel
- 21: Gleitlager
- 22: Bremsplatte
- 23: Tellerfeder
- 24: Elektromagnet
- 25: Deckel
- 26: Lager
- 27: Längsachse
- 28: Entriegelungsrichtung
- 29: Elektromagnet
- 30: Rotor

## Patentansprüche

1. Einrichtung (6) zum Verriegeln, insbesondere eines Aktuators (1), mit einem in einem Zylinder (2) geführten Stellkolben (3), der eine sich zum Mantel hin keilförmig erweiternde Ringnut (5) aufweist, in die mindestens ein durch eine Feder (14) belasteter Verriegelungsbolzen (9) radial eingreift, wobei eine Hilfskraft den Verriegelungsbolzen (9) im Betriebszustand des Aktuators (1) außer Eingriff bringt, indem sie die Feder (14) weiter vorspannt, dadurch **gekennzeichnet,** daß der Verriegelungsbolzen (9) zu seiner Längsachse (27) in Entriegelungsrichtung (28) geneigte Anlagefläche (12) aufweist, an der Fangklauen (15) anliegen und die von einem elektrischen Stellelement (19) in eine entriegelte Position gebracht und festgesetzt wird, wobei erregte Elektromagnete (24) eine Selbsthemmung an der Anlagefläche (12) des Verriegelungsbolzens (9) erzeugen.

2. Einrichtung (6) nach Anspruch 1, dadurch **gekennzeichnet,** daß die Anlagefläche (12) eine Flanke einer ringförmigen Ausnehmung (13) des Verriegelungsbolzens (9) bildet.

3. Einrichtung (6) nach Anspruch 1 oder 2, dadurch **gekennzeichnet,** daß die Elektromagnete (24) an den freien Enden der Fangklauen (15) angeordnet sind.

4. Einrichtung (6) nach einem der vorhergehenden Ansprüche, dadurch **gekennzeichnet,** daß die freien Enden der Fangklauen (15) den gleichen Neigungswinkel zur Längsachse (27) haben wie die Anlagefläche (12).

5. Einrichtung (6) nach einem der vorhergehenden Ansprüche, dadurch **gekennzeichnet,** daß die Fangklauen (15) an einer Hebelplatte (18) angelenkt sind, die von einem Elektromotor (19) über eine Hubspindel (20) in Richtung der Längsachse (27) verstellbar ist.

6. Einrichtung (6) nach einem der vorhergehenden Ansprüche, dadurch **gekennzeichnet,** daß der Elektromotor (19) ein hybriderregter EC-Motor mit einer integrierten aktiv entriegelbaren Magnetbremse (22, 23, 29) ist.

7. Einrichtung (6) nach einem der Ansprüche 5 oder 6, dadurch **gekennzeichnet,** daß die Hubspindel (20) durch den Elektromotor (19) hindurch geführt ist und an ihrem einen Ende, das dem Verriegelungsbolzen (9) abgewandt ist, über ein Festlager (26) im Gehäuse (7) der Einrichtung (6) und an ihrem anderen Ende über ein Loslager (21) und eine Stützplatte (16) im Gehäuse (7) gelagert ist.

8. Einrichtung (6) nach Anspruch 7, dadurch **gekennzeichnet,** daß zwischen der Stützplatte (16) und dem Verriegelungsbolzen (9) die Feder (14) angeordnet ist.

9. Einrichtung (6) nach einem der vorhergehenden Ansprüche, dadurch **gekennzeichnet,** daß die Feder (14) eine Gasdruckfeder ist.

10. Einrichtung (6) nach einem der vorhergehenden Ansprüche, dadurch **gekennzeichnet,** daß der Verriegelungsbolzen (9) in der entriegelten Position als Begrenzungsanschlag für die Stellbewegung des Stellkolbens (3) dient.
